Europäisches Patentamt

European Patent Office

Office européen des brevets

(19)

(11) **EP 1 447 934 A1**

(12) **EUROPEAN PATENT APPLICATION**

(43) Date of publication:
**18.08.2004 Bulletin 2004/34**

(51) Int Cl.[7]: **H04L 1/06**, H04L 1/00,
H04B 7/08, H04B 7/06

(21) Application number: **03368015.8**

(22) Date of filing: **12.02.2003**

| (84) Designated Contracting States:<br>**AT BE BG CH CY CZ DE DK EE ES FI FR GB GR HU IE IT LI LU MC NL PT SE SI SK TR**<br>Designated Extension States:<br>**AL LT LV MK RO**<br><br>(71) Applicant: **Institut Eurecom G.I.E.**<br>**06904 Sophia-Antipolis (FR)**<br><br>(72) Inventors:<br>• **Hernandez, Marco, C.Exc.Kohno Lab.,**<br>**G.Sch.Elec.Eng**<br>**Yokohama 240-8501 (JP)** | • **Nussbaum, Dominique**<br>**06600 Antibes (FR)**<br>• **Caire, Giuseppe**<br>**06410 Biot (FR)**<br><br>(74) Representative: **Schuffenecker, Thierry**<br>**97, chemin de Cassiopée,**<br>**Domaine de l'étoile**<br>**06610 La Gaude (FR)** |

(54) **Transmission and reception diversity process for wireless communications**

(57)    A process for transmitting and receiving information through a wireless communication channel comprising the steps of:

-   receiving a stream of databits of a given data rate
-   applying one unique encoder for creating a set of U substreams of the same data rate than said stream of data bits;
-   modulating each of said substreams in accordance with a modulation scheme; and
-   transmitting each of said U substreams to one different transmission antennas. Preferrably, the U substreams are interleaved and randomly spread-

ed.

In the receiver, the received signal is processed by means of a front-end matched filter in order to generate a first statistics of the said U sub-streams. There is then applied a controllable iterative interference cancellation process in order to suppress ISI and Self-MAI from said first statistics and, for each of the U sub-streams, deinterleaving and applying a parallel to serial processing. The serialized data stream is then input to a decoder, such as a Viterbi decoder, and a feedback loop regenerating U sub-streams is used to control the interference cancellor.

Fig. 2

EP 1 447 934 A1

**Description**

**Technical field of the invention**

The invention relates to digital telecommunication systems and more particularly to a process for transmitting and receiving information through a wireless channel which is well suited to transmission and reception diversity.

**Background art**

Wireless communication are constantly developing, providing new services and products, including digital cellular, wireless local loop and satellite systems.

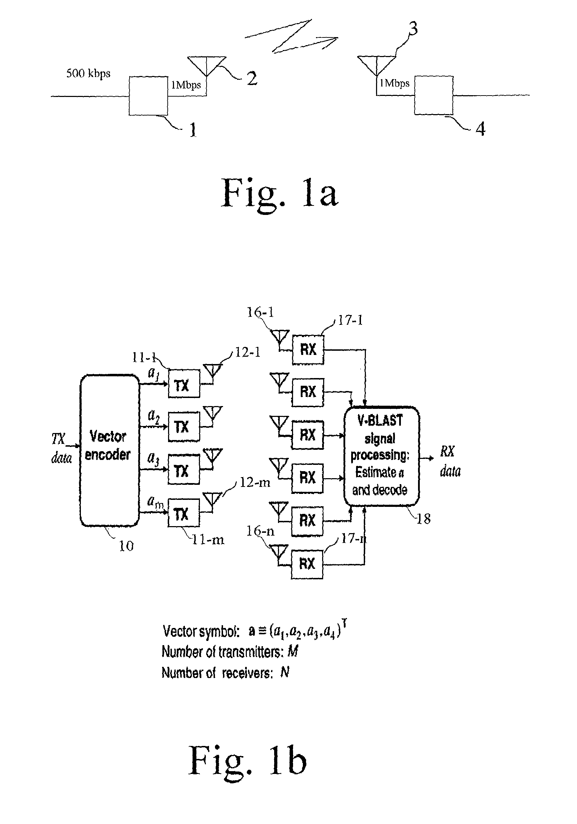

Wireless communication systems were traditionally based on the use of one unique communication channel involving one antenna for the transmitter and one antenna for the receiver. Such a communication channel is illustrated in figure 1a which shows a transmitter 1 communicating with a receiver 4 via antennas 2 and 3. As known in the art, the data rate of such a communication system is limited by the actual capacity of the channel, an evaluation of which can be derived from a measurement of the signal to noise ratio and also from the bandwidth of the transmitted signal. The use of error correcting codes in the transmission path, such as provided by convolutional encoders, allows the increase of the data rate and also that of the robustness of the communication in terms of bit error rates. For instance, as shown in figure 1 a, starting from a data rate of 500 kbps (of useful information) , the output of the convolutional encoder having a code rate of one half produces a stream of data of 1 Mbps of encoded bits and this higher symbol rate is forwarded to the transmission channel.

Spatial transmission and reception diversity were developed for the purpose of increasing the capacity of the channel.

Transmission diversity - an example of application being Linear Space Time encoding - is based on the transmission of different substreams - for instance U substreams derived from one main datastream - which are transmitted through different antennas. Transmission diversity can be associated with the concept of reception diversity where the signal is received in the receiver through a set of different antennas.

Transmission diversity and reception diversity can be combined in order to increase the capacity of the channel. Such an example is described and discussed in prior art document "V-BLAST: An architecture for realizing Very High Data Rates Over the Rich Scattering Wireless Channel", by P.W. Wolniansky et al, Bell Laboratories, Lucent Technologies, Crawford Hill Laboratory , 791 Holmdel-Keyport Rd. , Holmdel , NJ 0773 . In this technique, as shown in figure 1b, the user's data is encoded via an encoder 10 which produces m different sub streams which are forwarded to a set of m transmitters (11-1 to 11-m), then reaching m corresponding antennas (12-1 to 12-m). In the receiver, a set of n receivers (17-1 to 17-n) associated to corresponding antennas (16-1 to 16-n) produces a set of n sub streams which are decoded into a decoder 18 which performs the estimation and the decoding of the information.

Another example of transmission diversity is discussed in the article "Performance of Space-Combining transmission diversity with OFDM for broadband Wireless Access Systems", by Nobuaki MOCHIKUZI et al, NTT Access Network Service Systems Laboratories, 1-1 Hikaro-no-oka, Yokosuka-shi , Kanagawa, 239-0847 Japan.

While the technique of transmission diversity shows to be a very promising technique for wireless communication, it is complex to carry out. Firstly, the main data stream, which is provided in a communication system by the upper layer has to be divided in the known technique into different sub streams, and each sub stream has to be individually processed by a complex architecture, including multiple convolutional encoders. This substantially increases the amount of hardware and software components and, thus, increases the cost of the systems.

Clearly, this results in a complex architecture for both the transmitter and the receiver and it is desirable to provide a technique of transmission and reception diversity which substantially facilitates the design and the manufacturing costs of the transmitters and receivers in mobile communications.

**Summary of the invention**

It is an object of the present invention to provide a transmission and reception diversity technique which is based on a simple mechanism while increasing capacity and robustness to radio channels impairments.

This object is achieved by a process for transmitting and receiving information through a wireless communication channel. The transmission process comprises the steps of:

- receiving a stream of databits of a given data rate
- applying one unique encoder for generating an encoded data stream;
- multiplexing said encoded data stream for the purpose of creating U different sub streams;
- interleaving each of said sub streams;

- modulating each of said U sub streams in accordance with a modulation scheme; and
- transmitting each of said U substreams to one different transmission antenna.

Therefore, there is only needed one unique encoder receiving the databits stream from a upper layer which allows the increase of the capacity and the robustness.

The encoder can be any kind of encoder: turboencoder, Low Density Parity Check (LDPC) encoder or convolutional encoder for directly producing the different substreams. Preferably, the process involves a specific encoder, based on a convolutional encoder, which provides great simplicity.

In one particular embodiment, the different sub streams are random interleaved, random spread and BPSK modulated.

In the receiver, the process involves the steps of:

- applying a bank of matched filters to the received signals in order to generate first statistics of the said U substreams;
- applying a controllable iterative interference cancellation process in order to suppress Intersymbol Interference (ISI) and Self-MAI (Multiple Access Interference) from said first statistics,
- de-interleaving each of said U sub- streams ;
- applying a parallel to serial converter to the de-interleaved sub-streams;
- applying a decoder
- applying a feedback loop fed with the output of said decoder in order to control said interference cancellation process from the output of said decoder.

In one preferred embodiment, the first statistics are generated during the first iteration of said bank of matched filters.

Preferrably, the feedback loop comprises a serial to parallel converter providing U substreams and, for each substream, a demodulation block and a interleaver corresponding to the interleaver used in the transmit process.

In a preferred embodiment, the decoder in the receiver is a VITERBI decoder and the feedback loop involves a weighting mechanism.

The invention is well suited for the realization of a communication system having one or more antennas at both the transmitter and receiver. Particularly, the receiver may be a UMTS TDD mobile receiver.

**Description of the drawings**

An embodiment of the invention will now be described, by way of example only, with reference to the accompanying drawings, wherein:

Figure 1 a illustrates a communication channel based on one unique antenna for the transmitter and one for the receiver.

Figure 1b illustrates the principle of a known prior art technique based on transmission and reception diversity.

Figure 2 illustrates the general architecture of the transmitter in accordance with the present invention.

Figure 3 illustrates the general architecture of the receiver.

Figure 4a shows a simulation for an encoder having a rate of ½, two antennas for the transmitter and one for the receiver (2Tx, 1 Rx) and a Spreading Factor (SF) equal to 16, with a single path channel and two iterations.

Figure 4b shows a simulation for an encoder with a rate of ½ on a frequency selective channel, with two antennas for the transmitter and one for the receiver (2Tx + 1 Rx), and a spreading factor (SF) equal to 1, with a single path channel and 10 iterations.

Figure 4c shows a simulation for an encoder with a rate of ½ with two antennas for the transmitter and one for the receiver (2Tx + 1 Rx), and a spreading factor (SF) equal to 16, with two paths and two iterations.

Figure 4d shows a simulation for an encoder with a rate of ½ with two antennas for the transmitter and one for the receiver (2Tx + 1 Rx), and a spreading factor (SF) equal to 16, with two paths and ten iterations.

Figure 4e shows a simulation with an encoder having a rate of ¼ with four antennas for the transmitter and one for the receiver (4Tx + 1 Rx), and a spreading factor (SF) equal to 16, with one single path and 2 iterations.

Figure 4f shows a simulation with an encoder having a rate of ¼ with four antennas for the transmitter and one for the receiver (4Tx + 1 Rx), and a spreading factor (SF) equal to 1, with one single path and 10 iterations.

Figure 4g shows a simulation with an encoder having a rate of ¼ with four antennas for the transmitter and one for the receiver (4Tx + 1 Rx), and a spreading factor (SF) equal to 16, with two paths and 2 iterations.

Figure 4h shows a simulation with an encoder having a rate of ¼ with four antennas for the transmitter and one for the receiver (4Tx + 1 Rx), and a spreading factor (SF) equal to 1, with two paths and 10 iterations.

Figure 4i shows a simulation with an encoder having a rate of ½ with two antennas for the transmitter and two for the receiver (2Tx + 2Rx), and a spreading factor (SF) equal to 16, with one single path and 2 iterations.

Figure 4j shows a simulation with an encoder having a rate of ½ with two antennas for the transmitter and two for the receiver (2Tx + 2Rx), and a spreading factor (SF) equal to 1, with one signle path and 10 iterations.

Figure 4k shows a simulation with an encoder having a rate of ½ with two antennas for the transmitter and two for the receiver (2Tx + 2Rx), and a spreading factor (SF) equal to 1, with two paths and 10 iterations and beta weighting.

Figure 5 illustrates the preferred embodiment of the transmitter in a situation of transmission and reception diversity.

Figure 6 illustrates the preferred embodiment of the receiver using BPSK modulation and a parallel to serial converter 64.

Figure 7 illustrates an embodiment of the receiver using a weighting process for the iterative cancellor 82

Figure 8a shows one preferred embodiment of an encoder for a transmitter achieving encoding and multiplexing by two in order to generate two substreams.

Figure 8b shows one preferred embodiment of an encoder for the transmitter which achieves both encoding and multiplexing by three in order to generate three substreams.

### Description of the preferred embodiment of the invention

### I. General structure of the transmitter and receiver

#### 1.1. The Transmitter

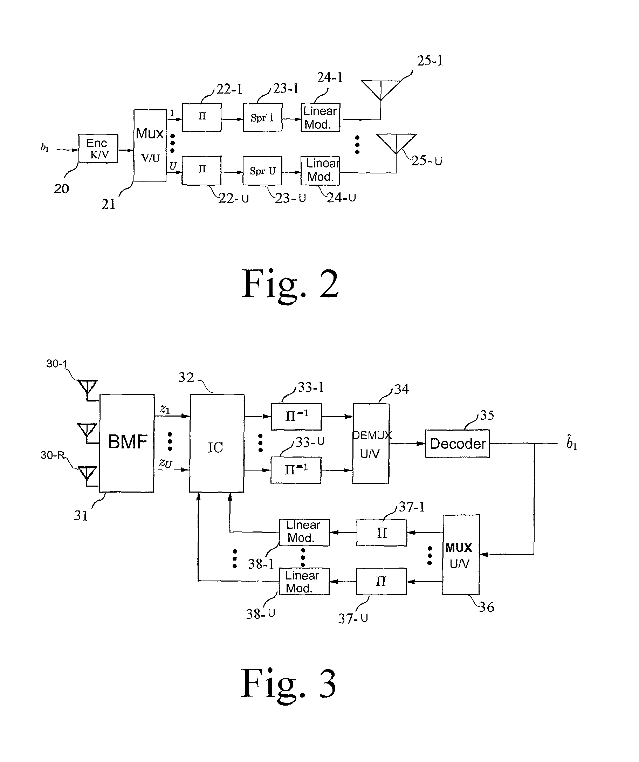

Figure 2 illustrates the general structure of one transmitter which achieves transmission diversity in accordance with the present invention. Preferrably, the transmitter will be adapted to the realization of a Universal Mobile Telecommunications system communication (U.M.T.S.) which, as known by the skilled man, is based on the direct sequence Code Division Multiplexing Access (C.D.M.A.) technique. As known by the skilled man, the UMTS standard is divided into two main technologies, namely, FDD and TDD. FDD (frequency division duplex) is based on DS-CDMA, and it is known as wideband CDMA or WCDMA. The other technology TDD (time division duplex) is based on a combination of CDMA and TDMA. Although the present description will be made in relation with UMTS-TDD, the skilled man will straightforwardly apply the teaching of the invention to UMTS-FDD as well. While CDMA is not part of this invention and will not be further developed, the reader will refer to the following technical references for more information about the CDMA concept:

Lee's Essentials of Wireless Communications , by Dr. William C.Y. Lee, Mc Graw-Hill;

CDMA systems Engineering Handbook , by Jhong S. Lee, leonard E. Miller, 1998.

CDMA RF System Engineering, by Samuel C. Yang, 1998;

Spread Spectrum CDMA Systems for Wireless Communications , Savo Glisic, Branca Vucetic ; 1997;

CDMA: Principles of Spread Spectrum Communication, Dr. Andrew VITERBI

Mobile Cellular Telecommunications Analog and Digital Systems, Dr William C. Y. Lee, McGraw Hill,

Mobile Communications Engineering , Dr William C. Y. Lee, McGraw Hill

The skilled man will straightforwardly apply the teaching of this invention to non UMTS communications. Further, while the invention is particularly fitted for the realization of mobile terminals, such as mobile telephones, it should not be limited to the transmission of voice signals.

The transmitter includes a set of U antennas for transmitting a single space time code symbol. An encoder 20, having a coding rate of K/V, receives the information bits $b_1[n]$ of a main user data stream and produces a bit stream which data rate is multiplied by a factor of V/K. Any type of encoder can be used for embodying encoder 20, and particularly a convolutional encoder, a turbo encoder or a Low Density Parity Check (LDPC) encoder. At the output of encoder 20, the bit stream is entered into a multiplexer 21 which achieves distribution of the bits between a set of U substreams.

Multiplexer 21 can be embodied in many different ways but is preferrably arranged in order to generate a set of U substreams, the value of which being equal to V/U the original data rate of the bitstream entering the encoder 20.

In the remaining part of the description, K will be set to 1 and V will be equal to U so as the data rate of every substream (only two substreams being represented in figure 2) has exactly the same data rate than the original bitstream entering encoder 20. Each substream which is generated by multiplexer 21 is processed by an interleaver (resp. interleaver 22-1 to 22-U) , and the interleaved substreams are then entered into an optional spreading element having a predefined spreading factor (resp. spreading element 23-1 to 23-U), followed by a linear modulator (resp. linear modulator 24-1 to 24-U).. Interleavers 22-1 to 22-U produce interleaving which is similar to that of the known Bit Interleaved Coded Modulation (B.I.C.M.) and, further, modulators 23-1 to 23-U are preferably Binary Phase Shift Keying (B.P.S.K.) modulators. After the linear modulation, the U different substreams are respectively transmitted to the channel through their corresponding antennas (resp. antennas 25-1 to 25-U).

It can be seen that the transmitter achieves transmission diversity based on one unique encoder. Capacity and robustness are increased at the cost of a very simple system.

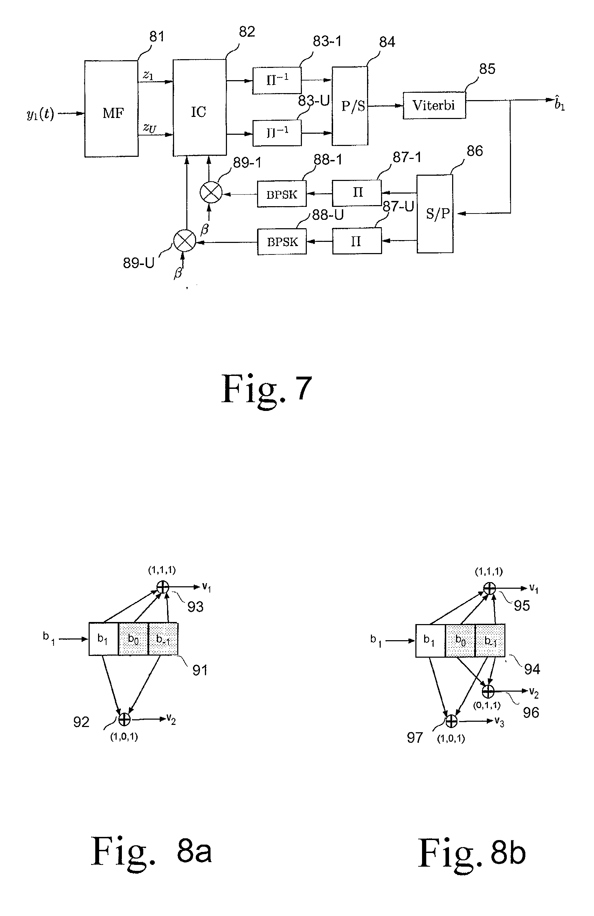

In one preferred embodiment, the multiplexer 21 and encoder 20 are embodied by one unique element, which is based on a convolutional encoder as illustrated in figure 8a and 8b.

Encoder 20 of Figure 8a is based on a bank 91 forming of a shift register having three taps. Two (modulo 2) adding block 92 and 93 are used for generating, from the contents of the said shift register, a set of two distinctive substreams. In one preferred embodiment, the adder 92 produces a first substream from generating polynom (1, 0, 1) (octal 5) while the adder 93 generates a second substream from generating polynom (1, 1, 1) (octal 7).

While, in the conventional way of realizing transmission diversity, the two substreams are combined by means of a serializer in order to produce a higher encoded data rate. In the particular embodiment of an encoding of 1/V , each substream - having the same data rate than the original data stream - is directly forwarded to the corresponding transmitting antenna.

This permits to easily achieve encoder 20 and multiplexer 21 by means of one unique process. The main data stream provided by the upper layer can thus be directly processed in order to generate two distinctive substreams of encoded bits.

The structure of the transmitter is thus clearly simplified.

Alternatively, different generating codes can be used. Figure 8b shows another non restrictive example of one encoder 20 producing, via three generating words (1, 0, 1); ( 0, 1, 1) and (1, 1, 1) (i.e. a (3, 5, 7) encoder) a set of three distinctive substreams which can be directly transmitted to three different antennas. This unique encoder comprises shift registers 94 associated with modulo 2 adder elements 95, 96 and 97 , each producing one distinct substream.

Other types of encoders can be used. For instance, a four state, memory 2, with code generators (5,7) or alternatively, a four states, memory two and code generators (5, 7, 7, 7), etc...

As described above, once generated, the U different substreams are random interleaved. It has been discovered by interleaving the U substreams significantly improves the transmission. They are then modulated, then spread and transmitted over independent flat or frequency selective channels. Additive White Gaussian Noise (AWGN) is added to the transmitted signals as well as the contribution of the other users.

### 1. 2 The receiver

Figure 3 illustrates the general structure of a receiver which is adapted to the transmitter of figure 2.

The receiver comprises a set of R antennas (resp. 30-1 to 30-R) and, in the front end, a bank of matched filters (BMF) 31 for producing a first statistics of the U transmitted sub-streams. In addition to the MF bank 31, the receiver further includes an unique interference canceller 32 which receives the U output $z_1$ to $z_u$ of BMF 31 and processes those so as to get rid of possible Intersymbol Interference (ISI) and Self-MAI (Multiple Access Interference). Interference canceller 32 is an iterative cancellor also receives U feedback values returned by a set of U feedback loops.

The U outputs generated by IC block 32 are respectively transmitted to a set of U de-interleaver (resp. 33-1 to 33-U), and then to a demultiplexer 34 - preferably a parallel to serial converter - for producing a serialized dataflow combining all the U substreams.

A decoder 35 then receives the output of parallel to serial converter 34 and decisions are then applied in order to generate the estimated values of the original bits. Preferably, decoder 35 is a hard type decoder, such as a Viterbi decoder for instance.

The output of the decoder 35 is also used for producing a set of U feedback loops which will be used for the iteration process of the Interference cancellor 32. To achieve this, the output of the Viterbi decoder 35 is transmitted to a multiplexer 36 - preferably a serial to parallel converter - which produces again a set of U substreams, and each substreams is subject of a random interleaving through a corresponding interleaver (resp. Block 37-1 to block 37-U) and then to a linear modulator (resp. Block 38-1 to 38-U). Clearly, the interleavers 37-1 to 37-U as well as the linear modulator 38-1 to 38-U correspond to those of the transmitter of figure 2.

After the first iteration, the output signal of the matched filters feeds the Viterbi decoder 35 for an initial estimation of the information bits, which estimates are used for controlling IC block 32.

For the purpose of illustrating the effectiveness of the transmission process, there will be provided below some developments related to the signal modelisation.

## II. Signal modelisation

The signal modelisation below is based on the use of convolutional codes, random interleaving, random spreading , BPSK modulation as well as the use of a VITERBI decoder.

The system considers the information bits $b[n]$ generated by an unique user (for clarity's sake but which could be extended to multiusers) is encoded by a convolutional code, which can be either rate $R = \frac{1}{2}$, four states, memory two and code generators (5,7), or rate $R = 1/4$, four states, memory two and code generators (5,7,7,7). As mentioned earlier the encoded signal is divided into $U$ substreams that are random interleaved and BPSK modulated. Let $a[n]$ represents the $n$th symbol generated that belongs to the set $\pm 1$. Thus, the codeword after interleaving for the $u$th antenna is given by

$$\boldsymbol{a}_u = \Big[a_u[0], a_u[1], \ldots, a_u[N-1]\Big]^T \qquad (2.1.1)$$

The spreading sequence for the $u^{th}$ antenna is represented as:

$$\boldsymbol{s}_u = \Big[s_u[0], s_u[1], \ldots, s_u[L-1]\Big]^T \qquad (2.1.2)$$

with unit energy :

$$s_u^H s_u = 1.$$

The transmitter filter $\Psi(t)$ is a square root raised cosine pulse shape filter with a roll-off factor of 0.22 . Thus the baseband signal representation is given by the following formula:

$$x_u(t) = \sqrt{\mathcal{E}_u} \sum_{n=0}^{N-1} a_u[n] \sum_{l=0}^{L-1} s_u[l]\psi(t - lT_c - nT) \qquad (2.1.3)$$

Where $\varepsilon_u$ is the symbol energy, L is the processing gain, T is the symbol period, and $T_c$ is the chip time.

The transmitted signals undergo either flat or frequency selective fading channels given by :

$$h_u(t) = \sum_{p=0}^{P_u-1} c_{u,p}\delta(t - \tau_{u,p}) \qquad (2.1.4)$$

Where $P_u$ is the number of resolvable fading paths, $\tau_{u,p}$ is the $p^{th}$ path, and $c_{u,p}$ is the $p^{th}$ path coefficient, which is assumed to follow a Rayleigh distribution in amplitude and uniform distribution in phase with negligible Doppler and angular spread.

The signals which are received in the receiver of figure 3 can be written as the convolution of the linear superposition of U transmitted signals with the channel impulse response $h_u(t)$:

$$y(t) = \sum_{u=1}^{U} \int_{-\infty}^{+\infty} x_u(\tau) h_u(t-\tau) \, dt\tau + \nu(t) \qquad (2.1.5)$$

$$= \sum_{u=1}^{U} \sum_{n=0}^{N-1} a_u[n] \, g_u(t - nT) + \nu(t) \qquad (2.1.6)$$

where $\nu(t)$ is the Gaussian noise and $g_u(t)$ represents the overall channel impulse response for the $u^{th}$ sub-stream and can be written as:

$$g_u(t) = \sqrt{\mathcal{E}_u} \sum_{l=0}^{L-1} s_u[l] \sum_{p=0}^{P_u-1} c_{u,p} \, \psi(t - lT_c - \tau_{u,p}) \qquad (2.1.7)$$

and represents the overall channel impulse response for the uth sub-stream.

The discrete time representation of the received signal is obtained by sampling at rate $W/Tc$ such that satisfies the Nyquist criterion. The pulse shape is constrained to last 20 $Tc,$ where most the energy is concentrated. Furthermore, the finite support of this pulse shape in convolution with the channel impulse response having a delay spread $Tm,$ and the spreading sequence corresponding to the $uth$ antenna is defined to last $N_g$ samples over 1 symbol period. Thus,

$$\boldsymbol{g}_u = \left[ g_u[0], \ldots, g_u[N_g - 1] \right]^T \qquad (2.1.8)$$

Finally, the discrete time received signal samples can be stack as

$$\boldsymbol{y}_l = \sum_{u=1}^{U} \boldsymbol{G}_{u,l} \boldsymbol{a}_u + \boldsymbol{\nu} = \boldsymbol{G}_l \boldsymbol{a} + \boldsymbol{\nu} \qquad (2.1.9)$$

where the subscript $l$ denotes the $lth$ antenna at the receiver, and

$$G_l = [G_{1,l, \ldots,} G_{U,l}] \qquad (2.1.10a)$$

$$a = [a_1^T, \ldots, a_U^T] \qquad (2.1.10b)$$

So that, the received signal at the $lth$ antenna at the receiver is given by

$$y_l = G_l a + \nu_1 \qquad (2.1.11)$$

where $\boldsymbol{y}_l$ has dimensions $((N-1)LW + N_g) \times 1,$ $\boldsymbol{G}_l$ has dimensions $((N-1)LW + N_g) \times UN,$ $\boldsymbol{a}$ has dimensions UNx1 and contains the concatenation of the space-time codewords, and $\nu_1$ has distribution

$$\mathcal{N}_c(\mathbf{0}, \sigma^2 \mathbf{I}).$$

Collecting the signals for $R$ antennas at the receiver, the total received signal is given by

$$\boldsymbol{y} = \left[\boldsymbol{y}_1^T, ..., \boldsymbol{y}_R^T\right]^T = \left[(\boldsymbol{G}_1\boldsymbol{a} + \boldsymbol{\nu}_1)^T, ..., (\boldsymbol{G}_R\boldsymbol{a} + \boldsymbol{\nu}_R)^T\right]^T \qquad (2.1.12)$$

The received signal y might be decoded at the receiver for the entire block length over all transmitted signals. The structure of the receiver illustrated in figure 3 substantially facilitates the processing of the received signals, based on linear filter 31 matched to either a flat or frequency selective channels, that produces the first statistics for every transmitted sub-stream and eventually used by a Viterbi decoder 35 estimate the information signal. As explained above, the estimated symbols are fed back to interference cancellation stage 32 that gets rid of ISI and self-MAI because of the independent spreading. Those more reliable signals are used again by the Viterbi decoder closing the iterative loop. After some iterations or performance criteria the final symbol estimates are delivered.

## III. Receiver with one unique antenna

There will now be discussed one example of a receiver having one unique antenna receiving the signal $y_1(t)$ (assumed to correspond to one unique user).

The bank of matched filters 31 produces the first statistics of the transmitted sub-streams:

$$\begin{aligned}
\boldsymbol{z} &= \Re\left\{\boldsymbol{G}_1^H \boldsymbol{y}_1\right\} \\
&= \Re\left\{\boldsymbol{G}_1^H \boldsymbol{G}_1 \boldsymbol{a} + \boldsymbol{G}_1^H \boldsymbol{\nu}\right\} \\
&= \boldsymbol{R}_1 \boldsymbol{a} + \boldsymbol{v}_1
\end{aligned} \qquad (3.1.1)$$

where

$$\boldsymbol{z} = \left[\boldsymbol{z}_1^T, \ldots, \boldsymbol{z}_U^T\right]^T \qquad (3.1.2a)$$

$$\boldsymbol{z}_u = \left[z_u[0], \ldots, z_u[N-1]\right]^T \qquad (3.1.2b)$$

$$R_1 = \mathrm{Re}[G_1^H\, G_1] \qquad (3.1.2c)$$

$$v_1 = \mathrm{Re}[G_1^H v] \qquad (3.1.2d)$$

Particularly, the matched filter output for the $u^{th}$ sub-stream at time n is given by:

$$z_u[n] = |g_u|^2 a_u[n] + \underbrace{\sum_{\substack{d=-D \\ d \neq 0}}^{D} r_{u,u}[d]a_u[n+d]}_{\text{ISI}} + \underbrace{\sum_{\substack{v=0 \\ v \neq u}}^{U-1} \sum_{d=-D}^{D} r_{u,v}[d]a_v[n+d]}_{\text{self}-\text{MAI}} + v_u[n \qquad (3.1.3)$$

where

$$D = \lfloor \frac{N_g}{LW} \rfloor$$

and the cross correlation coefficients between sub-streams are given by :

$$r_{u,v}[j - i] = R_{u,v}[i,j] \qquad (3.1.4a)$$

$$R_{u,v} = \mathrm{Re}[G_u^H G_v] \qquad (3.1.4b)$$

is a (u, v) block of $R_1$ with size NxN.

In the first iteration, the output signal of the matched filters 31 feeds the Viterbi decoder 35 for an initial estimation of the information bits. These initial estimates $\hat{a}_u^{(m)}[n]$ are fed back into IC block 32 in order to get rid of the possible ISI and self-MAI , and thus produces the following output:

$$z_u^{(m)}[n] = z_u[n] - \left( \sum_{\substack{d=-D \\ d \neq 0}}^{D} r_{u,u}[d]\hat{a}_u^{(m)}[n+d] + \sum_{\substack{v=0 \\ v \neq u}}^{U-1} \sum_{d=-D}^{D} r_{u,v}[d]\hat{a}_v^{(m)}[n+d] \right) \qquad (3.1.5a)$$

More explicitely,

$$z_u^{(m)}[n] = |g_u|^2 a_u[n] + \zeta_u^{(m)}[n] + v_u[n] \qquad (3.1.5b)$$

Where

$$\zeta_u^{(m)}[n] = \sum_{\substack{d=-D \\ d \neq 0}}^{D} r_{u,u}[d] \left( a_u[n+d] - \hat{a}_u^{(m)}[n+d] \right) + \sum_{\substack{v=0 \\ v \neq u}}^{U-1} \sum_{d=-D}^{D} r_{u,v}[d] \left( a_v[n+d] - \hat{a}_v^{(m)}[n+d] \right)$$

$$(3.1.5c)$$

and m corresponding to the iteration step.

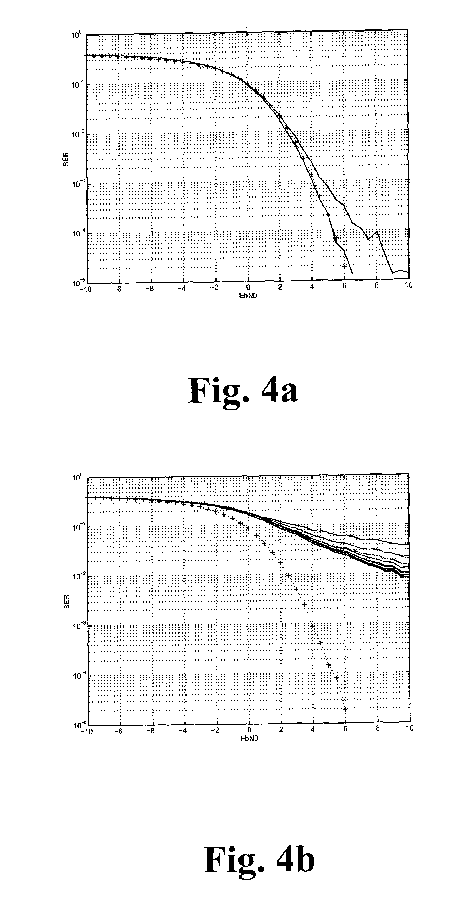

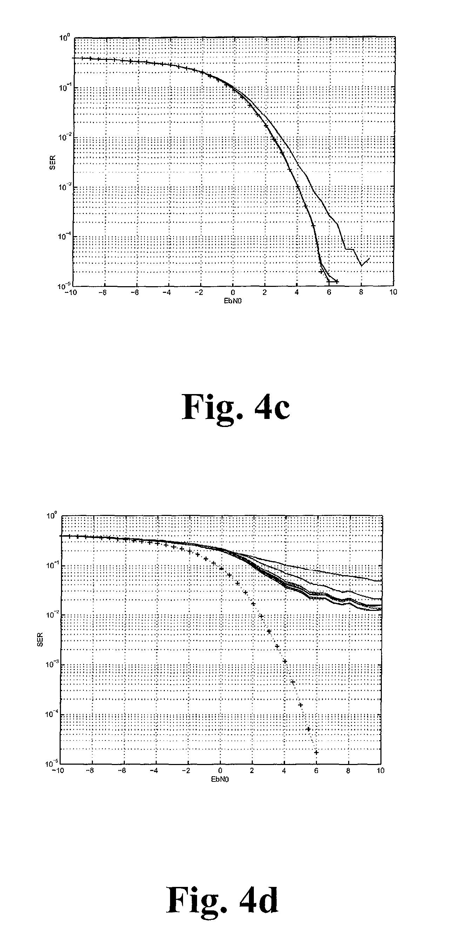

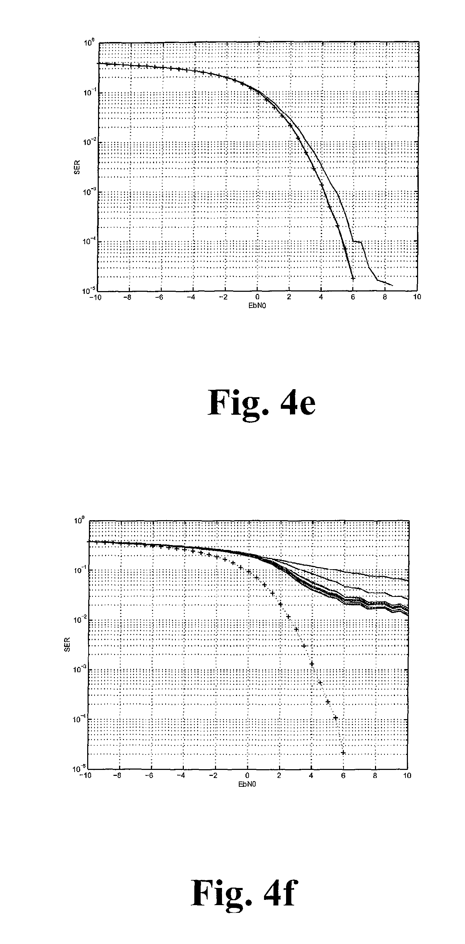

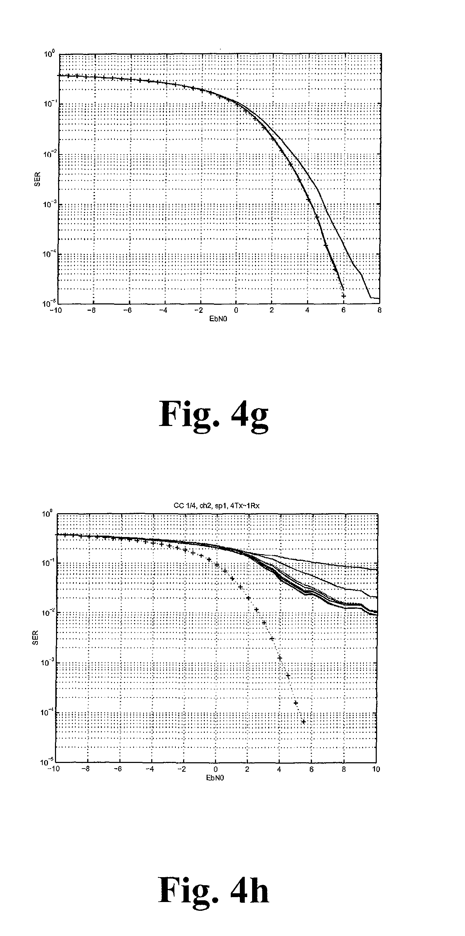

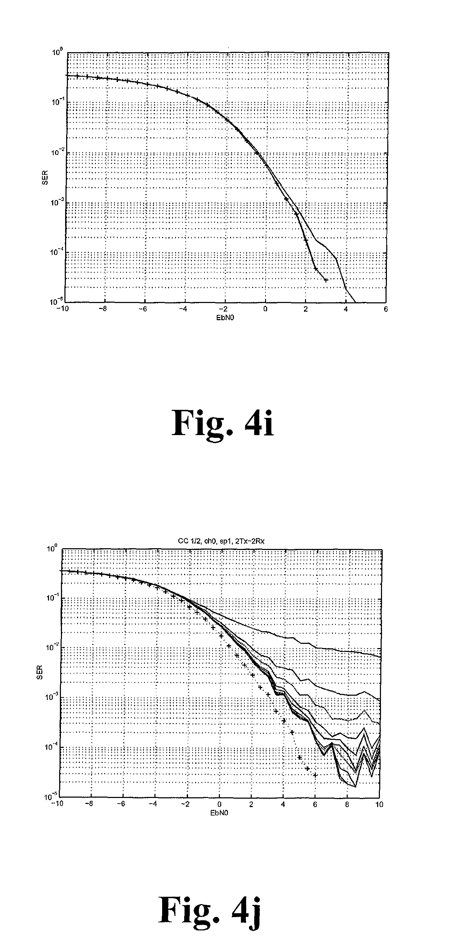

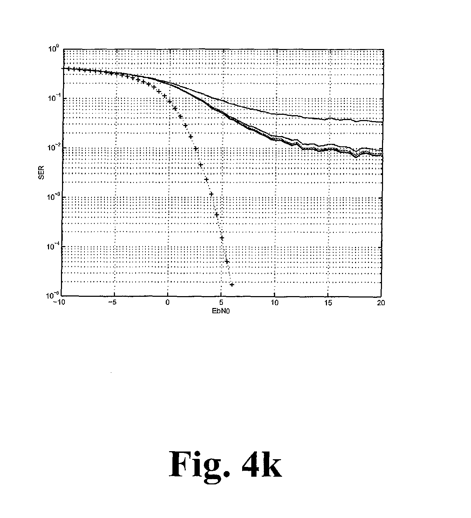

Figure 4A to 4k are illustrative charts of typical simulation of the results obtained with the receiver of figure 3.

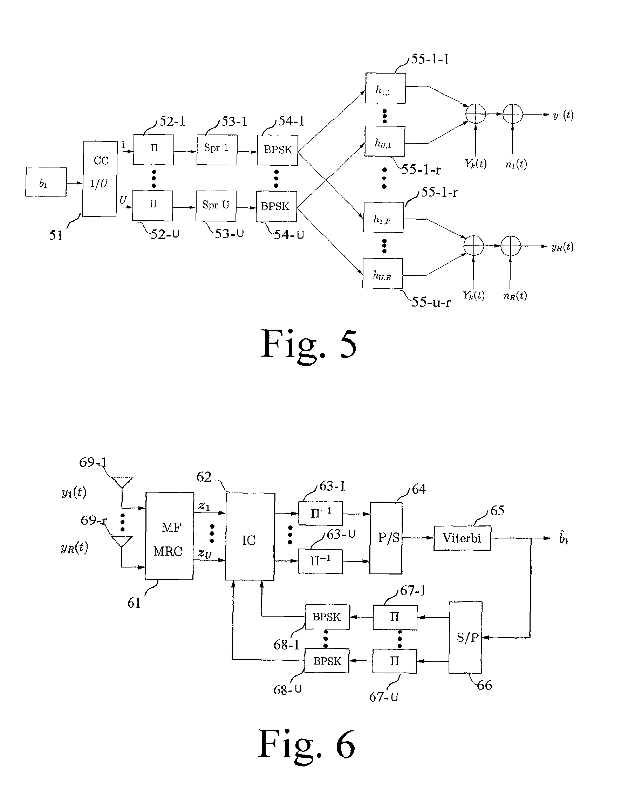

With respect to figures 5 and 6 there will now be described the situation of the Multiple Input Multiple Output Channel (MIMO). In this situation, the information bits are encoded into U sub-streams and sent through U different antennas. These transmitted signals undergo independent channels and are eventually received by R antennas at the receiver.

**IV. Receiver with multiple antennas - MIMO Channel**

The MIMO channel is assumed to be high rank, i.e., a rich scattering environment surrounds both transmitter and receiver, the channel coefficients are uncorrelated complex Gaussian random variables with negligible Doppler and angle spread the eingenvalues of the correlation matrix of the MIMO channel follows the Wishart distribution. Finally, the MIMO channel is assumed block fading, the channel coeffcients are constant in a codeword. The transmission chain can be seen as a serially concatenated communication system as illustrated in Figure 5. The convolutional code is the outer encoder, whose output is randomly interleaved. The combination of the different blocks in convolution with the different channels can be seen as an encoder, the inner encoder in fact. Thus, it can be seen that the the receiver develops an iterative joint equlization/decoding algorithm from the iterative algorithm for decoding of a serially concatenated coded system. As shown in Figure 2.3, the MIMO soft output decoder is an interference cancellation stage that can cope with ISI, self-MAI, and MAI in the multiuser case, such that equalization and interference cancellation is performed. Now, the binary soft output decoder for the outer encoder is an APP algorithm, normally the BCJR algorithm. In order to save complexity at the receiver, a Viterbi algorithm with hard-output is preferably employed. Simulation results has proven that the penalty paid by not feeding back extrinsic information is not critical.

The MIMO channel will be particularly described in reference with the preferred embodiments shown in figures 5 and 6. Referring to figure 5, the U substreams which are generated by convolutional encoder 51 - similar to encoder 21 described precedently - are independently interleaved (resp. by means of elements 52-1 to 52-u), then spread by an independant random sequence through spreading blocks 53-1 to 53-u , then BPSK modulated (resp. by means of Blocks 54-1 to 54-u) . These U sub-streams are then transmitted over independent flat or frequency selective channels and then received, in the receiver, via r different antennas. This situation of transmission diversity combined with reception diversity results in a set of uxr blocks 55-n-m , with n = 1 to u and m=1 to r , and figure 5 illustrates, for the sake of clarity, the radio channel impulse response of the channel for the first and u$^{th}$ sub-stream, respectively received by the 1 and u$^{th}$ antenna.

Figure 6 shows the preferred embodiment of the receiver, adapted to a set of R antennas 69-1 to 69- r (only two antennas being represented in the figure). The R antennas feed a Bank of Matched filters 61 which produce, as above, a first estimate of the U sub-streams $z_1$ to $z_U$. Those first estimates are deinterleaved, demultiplexed, and finally decoded. Then, the matched filters are not employed in the algorithm anymore. The matched filter outputs are used in the first iteration. After the first decoding, we have an estimate of the information bits. These estimates of information bits are re-encoded, re-multiplexed, re-interleaved, and re-modulated in order to produce an estimate of the U transmitted sub-streams. These U estimated substreams are used by the parallel interference cancellation stage, etc.

The U sub-streams are processed by an iterative interference canceller 62 which suppresses ISI and SELF - MAI components and outputs a clearer version of the U interleaved substreams. Those are forwarded to the corresponding interleavers (resp. 63-1 to 63-U), the output of which is is then forwarded to a parallel to serial converter 64 and then to a decoder - for instance a Viterbi decoder again - for the purpose of producing decisions on the received symbols. Similarly to the one-antenna receiver, the output of the Viterbi decoder is used in a feedback loop which produces, via a serial to parallel converteur 66, a set of U de-interleaver 67-1 to 67-U and then a set of of demodulator blocks 68-1 to 68-U , a set of feedback values which are used by the IC block 62 for the next iteration.

The concatenation of the received signal accross R antennas is given by the formula below:

$$y = \left[y_1^T, ..., y_R^T\right]^T = \left[\left(G_1 a + \nu_1\right)^T, ..., \left(G_R a + \nu_R\right)^T\right]^T \qquad (2.1.12)$$

Thus assuming that the receiver has knowledge of of the channel state information, and applying Maximum Ratio Combining (MRC) to the output of matched filters 61, the first statistics are calculated by

$$z = \Re\left[G^H y\right] \qquad (3.2.1a)$$

$$z = \Re\left[G_1^H G_1 a + v_1\right] + ..., + \Re\left[G_R^H G_R a + v_R\right] \qquad (3.2.1b)$$

This assumption can be made because the UMTS-TDD standard provides the channel estimation algorithm that estimates the radio channels.

The antennas at the receiver are assumed to be separated several wavelenghts such that there is no correlation between the received signals. Then, every antenna receives a replica of the transmitted signal but undergoing independent channels so that a MIMO configuration is actually created.

As mentioned above, different types of decoders can be used. Preferrably, hard type decoders are favored since they only need approximately half the processing power required by a soft output decoder like a BCJR algorithm for instance.. However, it should be noticed that the invention can well be applied even if decoder 35 or 65 is a soft type decoder.

The hard type decoder is clearly advantageous when only limited processing resources are available in the receiver. With respect to figure 7, there will now be described how one can improve the performance on convergence on the receiver. This is achieved by means of a weighting mechanism of the feedback loop used by the iterative process of the IC 32 and decoder 62.

The signals at the output of the Viterbi decoder can be weighted depending on the reliability of the estimated symbols.

The structure of such a decoder is illustrated in figure 7 . The antennas feed, as previously, a Bank of Matched filters 81 producing the the U sub-streams $z_1$ to $z_U$ which are then processed by an iterative interference canceller 82 for the purpose of suppressing ISI and SELF - MAI components. The U interleaved substreams produced by interference canceller 82 are each forwarded to an associated interleavers (resp. 83-1 to 83-u), the output of which is is then forwarded to a parallel to serial converter 84 and then to VITERBI decoder 85, the output of which is used in a feedback loop producing, via a serial to parallel converter 86, a set of U de-interleaver 87-1 to 87-U and then a set of U BPSK demodulation blocks 88-1 to 88-U, , and weighting blocks (resp. 89-1 to 89-u) a set of feedback values which are used by IC block 82 for the next iteration.

As explained above, weighting blocks 89-1 to 89-u enhances the decision mechanism of the Viterbi decoder. A criteria to calculate those weights is taken by minimizing the symbol error probability at the output of the Viterbi decoder. Now, because the different transmitted substreams undergo different channels, the received SNR's per substream are different. Here, two possible criteria are proposed, based on the union bound as a function of the received SNR's and multivariate weight enumerator function of the code employed. In one embodiment there is computed the symbol error probability at the output of the decoder as a function of these U S/NR's at the input of the decoder. Alternatively, there is computed an union bound on the average error rate in function of the multivariate weight enumerator function of the code employed. Afterwards a large system analysis of the system is applied to compute the weighting factor given by equation 3.3.4

## Claims

1. Process for transmitting and receiving information through a wireless communication channel comprising the steps of:

   - receiving a stream of databits of a given data rate
   - applying one unique encoder for generating an encoded data stream;
   - multiplexing said encoded data stream for the purpose of creating U different sub streams;
   - interleaving each of said sub stream;
   - modulating each of said U sub streams in accordance with a modulation scheme; and
   - transmitting each of said U substreams to one different transmission antennas.

2. Process according to claim 1 **characterized in that** it further involves the step of randomly spreading said modulated sub streams before their transmission through said antennas.

3. Process in accordance with claim 1 **characterized in that** said unique encoder is a turboencoder, a LDBD encoder or a convolutional encoder based encoder.

4. Process in accordance with claims 1 characterized said encoding and said multiplexing are achieved by means of a unique convolutional process which directly generates a set of U sub streams.

5. Process according to anyone of the preceding claims **characterized in that** it involves, in the receiver, the steps of:

   - applying a bank of matched filter to the received signals in order to generate a first statistics of the said U sub-streams;
- applying a controllable iterative interference cancellation process in order to suppress ISI and Self-MAI from said first statistics;
- de-interleaving each of said U sub-streams ;
- applying a parallel to serial to the de-interleaved sub-streams;
- applying a decoder
- applying a feedback loop to said interference cancellation process from the output of said decoder.

6. Process according to claim 4 **characterized in that** said feedback loop comprises a parallel to serial converter providing U substreams and, for each substream, a demodulation block and an interleaver corresponding to the interleaver used in the transmit process.

7. Process according to claim 5 **characterized in that** said decoder is a Viterbi decoder or a BCJR decoder.

8. Process according to anyone of the preceding claim **characterized in that** the receiver includes at least one antenna.

9. Process according to claim 6 **characterized in that** the feedback loop is weighted.

10. Receiver for a communication system comprising

- one bank of matched filters for generating U substreams from the received signals
- one unique interference canceller receiving n substreams, producing U outputs; each output going to one de-interleaver;
- parallel to serial converter receiving the output of said de-interleavers
- one decoder (iether hard or soft) receeving the otput of said parallel to serial converter;
- one unique feedback loop providing a set of U substreams with each substream being used for controlling said interference canceller

Fig. 1a

Vector symbol: $\mathbf{a} \equiv (a_1, a_2, a_3, a_4)^T$
Number of transmitters: $M$
Number of receivers: $N$

Fig. 1b

Fig. 2

Fig. 3

# Fig. 4a

# Fig. 4b

**Fig. 4c**

**Fig. 4d**

# Fig. 4e

# Fig. 4f

# Fig. 4g

# Fig. 4h

**Fig. 4i**

**Fig. 4j**

**Fig. 4k**

# Fig. 5

# Fig. 6

Fig. 7

Fig. 8a

Fig. 8b

**European Patent Office**

## EUROPEAN SEARCH REPORT

**Application Number**

EP 03 36 8015

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 356 528 B1 (LUNDBY STEIN S ET AL) 12 March 2002 (2002-03-12) | 1-4,8 | H04L1/06 H04L1/00 H04B7/08 H04B7/06 |
| Y | * the whole document * | 5-7,9 | |
| X | YONG W ET AL: "MULTIUSER DETECTOR WITH TRANSMIT DIVERSITY IN THE CONVOLUTIONALLY CODED DS/CDMA SYSTEMS" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, vol. 1 OF 3. CONF. 51, 15 May 2000 (2000-05-15), pages 552-555, XP000970680 ISBN: 0-7803-5719-1 * the whole document * | 1-4,8 | |
| X | ABE T ET AL: "Space-time turbo equalization and symbol detection in frequency selective MIMO channels" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY: IEEE, US, vol. 1 OF 4. CONF. 54, 7 October 2001 (2001-10-07), pages 1230-1234, XP010562628 ISBN: 0-7803-7005-8 | 10 | |
| Y | * the whole document * | 5-7,9 | |

**TECHNICAL FIELDS SEARCHED (Int.Cl.7)**

H04L
H04B

The present search report has been drawn up for all claims

| Place of search | Date of completion of the search | Examiner |
|---|---|---|
| THE HAGUE | 5 September 2003 | Toumpoulidis, T |

EP 1 447 934 A1

**ANNEX TO THE EUROPEAN SEARCH REPORT
ON EUROPEAN PATENT APPLICATION NO.**

EP 03 36 8015

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2003

| Patent document cited in search report | | Publication date | Patent family member(s) | | Publication date |
|---|---|---|---|---|---|
| US 6356528 | B1 | 12-03-2002 | AU | 4235600 A | 02-11-2000 |
| | | | BR | 0009766 A | 05-03-2002 |
| | | | CA | 2369959 A1 | 26-10-2000 |
| | | | CN | 1346548 T | 24-04-2002 |
| | | | EP | 1169790 A1 | 09-01-2002 |
| | | | JP | 2002542713 T | 10-12-2002 |
| | | | NO | 20014975 A | 04-12-2001 |
| | | | US | 2002036980 A1 | 28-03-2002 |
| | | | WO | 0064073 A1 | 26-10-2000 |

EPO FORM P0459

For more details about this annex : see Official Journal of the European Patent Office, No. 12/82

24